# EUROPEAN PATENT APPLICATION

(11) **EP 2 096 831 A1**
(43) Date of publication of application: **02.09.2009**
(21) Application number: 08290182.8
(22) Date of filing: 26.02.2008
(51) Int. Cl.: H04L 29/06

(54) **Method and device for managing video traffic**

(71) Applicant: Alcatel Lucent, 75008 Paris (FR)
(72) Inventor: Struyve, Kris, 8400 Oostende (BE)
(74) Representative: Plas, Axel Ivo Michel

(57) **Abstract**

The present invention is related to a method for managing video data in an access node, comprising the steps of
- receiving a stream of video data packets at the access node,
- receiving status information at the access node indicative of the on-line or offline display character of said video data, and
- upon congestion in the access node, giving priority for further transmission to video data packets that, from said status information, are found to have the on-line status.

## Description

### Field of the Invention

The present invention generally relates to the field of traffic management of video streams.

### Background of the Invention

Although DSL downstream bit rates increase as technology evolves, the challenge remains to support more video (IPTV, Internet) streams over longer distances at improved quality levels. Upon statistically multiplexing multiple variable bit rate (VBR) encoded video streams on the last mile, traffic congestion may occur in the packet queues of the access node resulting in visible distortions of the video signal. The same may occur with capped-VBR video streams. Capped-VBR video aims at a constant quality, but when in certain intervals this requires too high a bit rate, the bit rate is limited (i.e., capped) in order to support more video flows on the links, at the expense of a quality reduction. In capped-VBR the possibly large bit rate fluctuations that may occur in unconstrained VBR video are thus avoided.

Service providers control the likelihood of congestion by allocating more resources to the individual video streams (thus reducing the number of concurrent video streams), by increasing the line rate (thus reducing the reach) and/or by increasing the compression of the video stream (thus reducing the quality).

Complementary, selective packet discarding (so called "traffic denting") may be applied. Instead of dropping video packets randomly when congestion occurs, the video packets are discarded selectively for example based upon a priority marker. The priority level should be proportional to the Quality-of-Experience (QoE) impact.

The performance gain of selective packet discarding depends upon the granularity of the packet classification (e.g. per picture, per slice group, per content type), which in turn increases the complexity and decreases the efficiency of the (re-)packetisation of the video data (e.g. in the head-end). Although selective packet discarding reduces the QoE impact of congestion on the QoE, it will not reduce it to zero.

Complementary, the congestion problem can be reduced by increasing the size of the video queues in the access node. This, however, increases the delay.

From patents documents like EP1811780-A1 and US6278965 it is known to provide in an access node a cache buffer for video data. In US6278965 this was done for increasing the zapping or channel changing speed. The video cache function proposed in EP1811780-A1 serves the additional purposes of providing channel quality improvement through fast retransmission functionality and increased flexibility in selecting video channels to be cached.

Consequently, there is a need for a method for managing video traffic in an access node, wherein the above-mentioned drawbacks of the prior art are overcome.

It is an object of the present invention to provide such an improved method wherein the problem of traffic congestion related to video streams in an access node is properly dealt with. It is a further object to provide an access node arranged for performing according to the described method. Another object is to provide a customer premises equipment that can be used in the method.

### Summary of the Invention

The present invention relates to a method for managing video data in an access node. The method comprises the steps of receiving a stream of video data packets at the access node and receiving status information at the access node indicative of the on-line or off-line character of the video data. In a subsequent step, for further transmission priority is given to video data packets that, from said status information, are found to have the on-line status. The method may comprise an explicit step of determining the on-line or off-line status of the received video data packets from the status information. The management of video traffic so differentiates between video streams that are displayed 'on the fly' and streams that are not displayed 'on the fly'.

In a preferred embodiment, when congestion occurs in the access node, video data packets which have been found to have the off-line status, are temporarily cached. Advantageously, the cached video data packets are then forwarded when the congestion is resolved.

Optionally, the cached video data packets are forwarded after having been reordered.

In another preferred embodiment, when congestion occurs in the access node, video data packets with the off-line status are selectively discarded. In that case the method preferably comprises a step of applying error-correction for recovering the video data packets that are discarded.

In an advantageous embodiment the video data packets with on-line status form a broadcast TV stream, a video-on-demand stream or progressive download stream. The video data packets with an off-line status on the other hand, typically form a broadcast TV stream being recorded or a video-on-demand stream or progressive-download stream being prefetched.

In a further embodiment the video data packets further comprise a marker allowing selective packet discarding based on a priority level indicated by the marker. The method is so combined with a mechanism for dealing with traffic congestion as known in the prior art.

In a typical embodiment of the present invention a plurality of video data packets streams is received at the access node.

In another aspect the invention relates to an access node for managing video data. The access node comprises receiver means for receiving a stream of video data packets and is **characterised in that** it is arranged for receiving status information indicative of the on-line or off-line displaying of the video data and in that it is arranged for giving priority for further transmission to video data packets that from the status information are found to have the on-line status.

In a further aspect the invention relates to a device for receiving video data at the customer premises, i.e. a so called CPE or remote terminal. The device is arranged for transmitting status information, whereby the status information is indicative of the on-line or off-line displaying of video data. The online/offline displaying of the video data is determined by an access node coupled to the device.

Advantageously this device can be coupled directly to an access node. Alternatively, it can also be coupled to a video server.

### Brief Description of the Drawings

Fig. 1 illustrates a the notion of on-line versus off-line video stream.
Fig. 2 illustrates three options receive at the access node status information indicative of the on-line or off-line character of the video data.

### Detailed Description of Embodiment(s)

The description below explains the present invention in detail. It will be apparent to the skilled person that the term 'access node' is intended to mean any type of access node that can be used in telecommunication networks. Examples include but are not limited to a DSL Access Multiplexer (DSLAM), a CMTS or Cable Modem Termination System for cable based or Hybrid Fibre Coax (HFC) based access networks, a DLC or Digital Loop Carrier, an Optical Fibre Aggregator for fibre based access networks like PONs or Passive Optical Networks, a node B or Radio Network Controller (RNC) for radio based systems or the airborne node in satellite based access systems, etc... The access network could be a point-to-point access network (as is the case for the different DSL flavours), or a point-to-multipoint access network (as is the case for cable or fibre based systems). It is further noticed that anywhere this patent application mentions 'TV' or 'video' or 'IPTV', any type of video content is intended to be covered, irrespective of its origin, its nature (live content, scheduled on-demand content, ...) and its intended audience (e.g. nation-wide, community-restricted, etc.).

The term 'video streams' covers any type of packet based delivery of video content or TV content, like for instance nation-wide IPTV channels offering live content, community TV channels restricted to members of a community, and (less likely) video-on-demand (VoD) channels or near video-on-demand (NVoD) channels, etc.

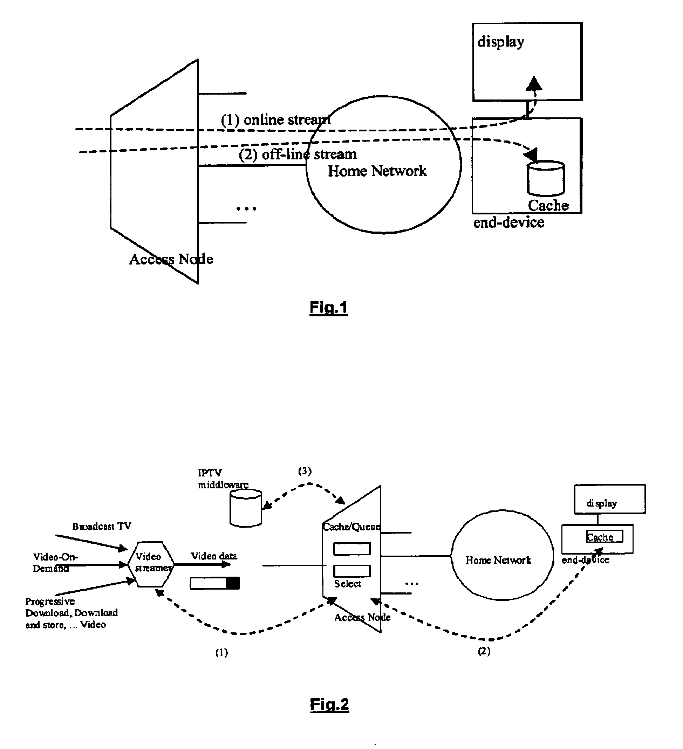

The present invention proposes to differentiate the management of video traffic in the access node for video streams - denoted on-line streams - that are "displayed on-the-fly" (or "consumed live") in the home on one hand, and video streams - denoted off-line streams - that are "not displayed on-the-fly" on the other hand. Fig.1 illustrates the distinction between an on-line and an off-line stream. On-line streams can be broadcast TV as well as Video On Demand. Examples of off-line streams are broadcast TV being recorded or time-shifted in the home, or Video On Demand being pre-fetched.

This approach is based on an indication of the on-line/off-line character of the video data packets received in the access node. The end-user's actions (such as play, pause, stop, record, play and record, etc.), entered using a remote TV control or other means, determine the on-line/off-line status of the video stream. The end-user device that interfaces with the end-user, and also receives and displays the video - today this is typically a STB at the customer premise but in future this may be integrated in a device at the service provider premise - must be arranged to relay this on-line/off-line status information to the access node, either directly or indirectly as is described below. Three possible ways of relaying such status information are shown in Fig.2. In a first option, the end-device is arranged to directly transmit to the access node (see (2) in Fig.2) via the signalling or the control plane status information indicative of the on-line or off-line status of the video data. In a second option (see (1) in Fig.2), the end-user device is arranged to transmit this status information to the video streamer, and the video streamer is arranged either to mark the video packets or to forward this status information to the access node via the signalling or the control plane. If the video streamer marks the video packets, the access node must be arranged to detect and monitor the marker in the video packets, and deduce the status information accordingly. In a third option (see (3) in Fig.2), the end-device is arranged to communicate the status information to the IPTV middleware platform, and the IPTV middleware platform is arranged to forward this status information to the access node via, for example, a management and operations interface.

It should be noted that the exchange of the on-line/off-line status information between the end-device and the access node, via one of the three options described above, is part of the present invention, and requires dedicated arrangements. For example, the IGMP join messages, that are used to tune into a Broadcast TV channel, do not reflect the on-line/off-line character of a stream. As another example, consider the RTSP protocol to stream Video on Demand. Although it includes play, pause and stop commands (among others), further arrangements are needed to support a prefetching scenario in which the end-user pauses the display, the end-device continues receiving and buffering the video packets and the network manages the related traffic differently than normally (i.e., when displayed).

In the access node the on-line or off-line status of the received video data packets is determined from the received status information.

When network congestion occurs in the access node, priority for further transmission is given to video data packets having the on-line status.

In a preferred embodiment the packets from off-line streams are temporarily cached upon congestion on the last mile. They are forwarded as soon as possible, i.e., as soon as the traffic level decreases. Alternatively, larger queues can be used for off-line streams. In the first case, as opposed to the second case, the off-line packets may be reordered.

In another preferred embodiment, upon congestion on the last mile, packets from the off-line streams are discarded first, hence lowering the congestion (and impact) on the live streams. Error-correcting mechanisms (e.g. reliable UDP for broadcast TV, TCP acknowledgement (ACK) for Video On Demand, advanced PLC (Packet Loss Concealment) in the end device (e.g. a set top box (STB)) may be used to resolve the discarded off-line packets. As the streams are not "displayed" live, the delay requirements for these error-correcting mechanisms are less stringent.

In a further embodiment the above solutions can be combined with the selective packet discarding mechanism as known in the prior art and discussed in the background section.

It is to be noted that the solution of the present invention is different from a Network Personal Video Recorder (PVR). The service provider does not archive complete/partial video streams upon request of the end-user.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for managing video data in an access node, comprising the steps of receiving a stream of video data packets at the access node,
receiving status information at the access node indicative of the on-line or off-line displaying of said video data, and
giving priority for further transmission to video data packets that from said status information are found to have the on-line status.

2. The method for managing video data as in claim 1, wherein, when congestion occurs in the access node, video data packets found to have the off-line status are temporarily cached.

3. The method for managing video data as in claim 2, wherein the cached video data packets are forwarded when the congestion is resolved.

4. The method for managing video data as in claim 3, wherein the cached video data packets are forwarded after having been reordered.

5. The method for managing video data as in claim 1, wherein, when congestion occurs in the access node, video data packets with the off-line status are selectively discarded.

6. The method for managing video data as in claim 5, further comprising a step of applying error-correction for recovering the video data packets that are discarded.

7. The method for managing video data as in claim 1, wherein the video data packets with the on-line status form a broadcast TV stream, a video-on-demand stream or a progressive download stream.

8. The method for managing video data as in claim 1, wherein the video data packets with the off-line status form a broadcast TV stream being recorded or a video-on-demand stream or progressive download stream being prefetched.

9. The method for managing video data as in claim 1, wherein the video data packets further comprise a marker allowing selective packet discarding based on a priority level indicated by the marker.

10. An access node for managing video data comprising receiver means for receiving a stream of video data packets, **characterised in that** the access node is arranged for receiving status information indicative of the on-line or off-line displaying of said video data and **in that** it is arranged for giving priority for further transmission to video data packets that from said status information are found to have the on-line status.

11. A device for receiving video data at the customer premises **characterized in that** it is arranged for transmitting status information, said status information being indicative of the on-line or off-line playing of video data whereby said online/offline displaying of said video data is determined by an access node coupled to said device.

12. A device as in claim 11, arranged for being coupled directly to the access node.

13. A device as in claim 12, arranged for being coupled to a video server.

## Amended claims

### Amended claims in accordance with Rule 137(2) EPC.

**1.** A method for managing video data in an access node, comprising the steps of receiving a stream of video data packets at the access node,
receiving status information at the access node indicative of the on-line or off-line displaying of said video data, said status information being determined by a user action on said stream, and
giving priority for further transmission to video data packets that from said status information are found to have the on-line status.

**2.** The method for managing video data as in claim 1, wherein, when congestion occurs in the access node, video data packets found to have the off-line status are temporarily cached.

**3.** The method for managing video data as in claim 2, wherein the cached video data packets are forwarded when the congestion is resolved.

**4.** The method for managing video data as in claim 3, wherein the cached video data packets are forwarded after having been reordered.

**5.** The method for managing video data as in claim 1, wherein, when congestion occurs in the access node, video data packets with the off-line status are selectively discarded.

**6.** The method for managing video data as in claim 5, further comprising a step of applying error-correction for recovering the video data packets that are discarded.

**7.** The method for managing video data as in claim 1, wherein the video data packets with the on-line status form a broadcast TV stream, a video-on-demand stream or a progressive download stream.

**8.** The method for managing video data as in claim 1, wherein the video data packets with the off-line status form a broadcast TV stream being recorded or a video-on-demand stream or progressive download stream being prefetched.

**9.** The method for managing video data as in claim 1, wherein the video data packets further comprise a marker allowing selective packet discarding based on a priority level indicated by the marker.

**10.** An access node for managing video data comprising receiver means for receiving a stream of video data packets, **characterised in that** the access node is arranged for receiving status information indicative of the on-line or off-line displaying of said video data, said status information being determined by a user action on said stream, and **in that** it is arranged for giving priority for further transmission to video data packets that from said status information are found to have the on-line status.

**11.** A device for receiving video data at the customer premises **characterized in that** it is arranged for transmitting status information, said status information being determined by a user action on said stream and being indicative of the on-line or off-line displaying of video data whereby said online/offline displaying of said video data is determined by an access node coupled to said device.

**12.** A device as in claim 11, arranged for being coupled directly to the access node.

**13.** A device as in claim 12, arranged for being coupled to a video server.
